# EUROPÄISCHE PATENTSCHRIFT

(11) **EP 1 991 851 B1**
(45) Veröffentlichungstag und Bekanntmachung des Hinweises auf die Patenterteilung: **26.10.2011**
(21) Anmeldenummer: 07712322.2
(22) Anmeldetag: 26.02.2007
(51) Int. Cl.: G01N 1/04

(54) **VORRICHTUNG UND VERFAHREN ZUR ENTNAHME EINES BODENMONOLITHEN AUS EINEM LYSIMETERGEFÄß**
DEVICE AND METHOD FOR REMOVING A SOIL MONOLITH FROM A LYSIMETER CASING
DISPOSITIF ET PROCEDE POUR ELIMINER UN MONOLITHE DU SOL A PARTIR D'UNE CASE LYSIMETRIQUE

(30) Priorität: 27.02.2006 DE 102006010158
(43) Veröffentlichungstag der Anmeldung: 19.11.2008
(73) Patentinhaber: Umwelt-Geräte-Technik GmbH, 15374 Münchenberg (DE); GSF-Forschungszentrum für Umwelt und Gesundheit GmbH, 85764 Oberschleissheim (DE)
(72) Erfinder: RETH, Sascha, 82239 Alling (DE); SEYFARTH, Manfred, 15566 Schöneiche (DE); GEFKE, Oliver, 85464 Finsing (DE); FRIEDRICH, Hartmut, 15374 Müncheberg (DE)
(74) Vertreter: Schneider, Henry
(86) Internationale Anmeldenummer: PCT/EP2007/051794
(87) Internationale Veröffentlichungsnummer: WO 2007/099074

(56) Entgegenhaltungen:
- EP-A1- 0 448 812
- DE-A1- 4 238 989
- DE-A1- 10 353 485

## Beschreibung

Die Erfindung betrifft eine Vorrichtung und ein Verfahren zur Entnahme eines Bodenmonolithen aus einem Lysimetergefäß.

Zur Durchführung von Langzeituntersuchungen an großvolumigen Bodenmonolithen ist der Einsatz von Lysimetergefäßen bekannt. Diese Lysimetergefäße besitzen üblicherweise eine zylinderförmige Gestalt. Je nach Volumen des zu untersuchenden Bodenmonolithen besitzen die Lysimetergefäße beispielsweise Höhen bis zu 3,5 m und Querschnittsflächen bis zu 5 m². Diese Lysimetergefäße werden mit den zu untersuchenden Bodenmonolithen gefüllt, indem beispielsweise eine Schüttfüllung des Lysimetergefäßes erfolgt oder das Lysimetergefäß in einen gewachsenen Boden eingebracht wird. Hierbei sind sowohl die Gewinnung horizontaler als auch vertikaler Bodenmonolithen bekannt.

Während einer Langzeituntersuchung von typischerweise mehreren Jahren erfolgt eine Untersuchung des Wasserhaushaltes, Stoffhaushaltes, Vegetation, Bodenfauna oder dergleichen in dem Lysimetergefäß.

Hierzu ist unter anderem bekannt, in, an und/oder unter dem Lysimetergefäß Sensoren, Messeinrichtungen und dergleichen anzuordnen, die die gewünschten und geeigneten Messwerte liefern, wobei die Messwerte erfasst und ausgewertet werden.

Nach Abschluss des Langzeitversuches ist es wünschenswert, detaillierte Untersuchungen im beziehungsweise am Bodenmonolithen selber durchzuführen. Hierzu muss der Bodenmonolith aus dem Lysimetergefäß entfernt werden. Bekannt ist, durch mechanische Bearbeitung das Lysimetergefäß zu zerstören und den Bodenmonolithen somit freizulegen. Hierbei ist nachteilig, dass durch die mechanische Bearbeitung, beispielsweise mittels Schneidbrennern, eine Einwirkung auf den Bodenmonolithen erfolgt, der zu einer Veränderung der Struktur des Bodenmonolithen führt. Hierdurch wird eine Verfälschung der Messergebnisse der Langzeituntersuchung in Kauf genommen.

Der hier nächstliegende Stand der Technik DE 42 38 989 A1 (Dokument D1) zeigt eine Vorrichtung zur Entnahme von Bodenproben mit einem Stechrahmen (Lysimetergefäß) dem eine Bodenprobe (Bodenmonolith) entnommen ist. Diese Bodenprobe ist durch einen Deckellängsantrieb aus dem Stechrahmen hinaus in einen Transportbehälter 18 drückbar. Dieses entspricht dem Oberbegriff des neuen Anspruchs 1.

Bei der aus der Druckschrift D1 bekannten Vorrichtung ist nachteilig, dass zwischen Blechrahmen und Bodenprobe ein relativ fester Verbund existiert. Beim Ausdrücken der Bodenprobe aus dem Stechrahmen können Strukturveränderungen der Bodenprobe eintreten. Dieses führt zu Ungenauigkeiten bei späteren Untersuchungen. Durch die erfindungsgemäß vorgesehene Maßnahme, dass mittels einer Schneideinrichtung ein Lösen des Bodenmonolithen von dem Lysimetergefäß erfolgt, wobei dieses Lösen über den gesamten Umfang des Bodenmonolithen dadurch in einfacher Weise erfolgt, dass die Halte- und Aufnahmeneinrichtung für das Lysimetergefäß drehbar gelagert ist, während diese Anhaftungen des Bodenmonolithen an der Innenwand des Lysimetergefäßes sicher vermieden werden. Somit kann ein zerstörungsfreier und in seinen Strukturen unbeeinträchtigter Bodenmonolith aus dem Lysimetergefäß entnommen werden.

Eine derartige Vorrichtung ist dem Dokument D1 nicht zu entnehmen und durch dieses auch nicht nahe gelegt. Der Gegenstand des neuen Anspruchs 1 ist somit nicht nur neu, sondern beruht auch auf erfinderischer Tätigkeit.

Auf das weiterhin in das Verfahren eingeführte zweite Dokument D2 (EP 0 448 812 A1) kann eine derartige Vorrichtung nicht nahe legen. Dort ist eine Schneideinrichtung für Bodenproben und ein Verfahren zum schichtweisen Schneiden einer Bodenprobe offenbart. Das Dokument entspricht den bereits in der Beschreibungseinleitung kritisierten Stand der Technik gemäß DE 40 049 993 C2 (prioritätsbegründende Anmeldung von EP 0 448 812 A1).

Das ferner noch benannte Dokument D3 (DE 103 53 485 A1) offenbart eine Vorrichtung und Verfahren zum horizontalen monolithischen Entnehmen von Bodenkörpern. Irgendwelche Einrichtung zur Entnahme des Bodenmonolithen aus dem Lysimetergefäß sind dem Dokument D3 nicht zu entnehmen.

Aus DE 40 09 993 C2 / EP 0 448 812 A1ist eine Schneideinrichtung für Bodenproben, insbesondere für gewachsene Bodenmonolithe aus einer Freiland-Lysimeteranlage bekannt, bei der auf einem stationären Schneidtisch eine Messerplattenanordnung vorgesehen ist, mittels der einzelne Scheiben des Bodenmonolithen abgetrennt werden können, so dass in den abgetrennten Scheiben des Bodenmonolithen weitere Laboruntersuchungen durchgeführt werden können. Der Erfindung liegt die Aufgabe zugrunde, eine Vorrichtung und ein Verfahren zur Entnahme eines Bodenmonolithen aus einem Lysimetergefäß zu schaffen, mittels denen in einfacher Weise ohne Störung der ursprünglichen Struktur der Bodenmonolith insgesamt oder teilweise aus dem Lysimetergefäß entnommen werden kann.

Erfindungsgemäß wird diese Aufgabe durch eine Vorrichtung mit den im Anspruch 1 genannten Merkmalen gelöst. Dadurch, dass die Vorrichtung (10) eine erste Schneideinrichtung (32) umfasst, mittels der ein Lösen der Außenwandung des Bodenmonolithen (12) von der Innenwandung des Lysimetergefäßes (14) möglich ist und die Halte- und Aufnahmeeinrichtung (16) für das Lysimetergefäß (14) drehbar gelagert ist, so dass das Lysimetergefäß (14) mit dem Bodenmonolithen (12) um seine Längsachse (22) drehbar ist,
wird in einfacher Weise eine zerstörungsfreie Gewinnung des Bodenmonolithen möglich. Es erfolgt quasi eine zerstörungsfreie Trennung des Bodenmonolithen von dem Lysimetergefäß. Hierbei bleibt sowohl das Lysimetergefäß unbeschädigt als auch die Struktur des Bodenmonolithen im Wesentlichen unbeeinträchtigt. Der Bodenmonolith wird quasi im Ganzen aus dem Lysimetergefäß verdrängt. Hierdurch entsteht ein in seiner Struktur unveränderter Bodenmonolith zur weiteren Untersuchung beziehungsweise Beprobung zur Verfügung. Insbesondere wird es so möglich, den Bodenmonolithen insgesamt durch geeignete Untersuchungsverfahren, beispielsweise mittels Computertomographie, zu untersuchen.

Dies erste Schneideinrichtung ist vorzugsweise als Seilschneider ausgebildet, so dass in einfacher Weise ein Einfädeln des Schneidseiles an einer definierten Stelle zwischen Bodenmonolith und Lysimetergefäß erfolgen kann.

Dadurch, dass die Halte- und Aufnahmeeinrichtung für das Lysimetergefäß drehbar gelagert ist, so dass das Lysimetergefäß mit dem Bodenmonolithen um seine Längsachse drehbar ist, wird in einfacher Weise ein Lösen des Bodenmonolithen vom Lysimetergefäß über den gesamten Umfang möglich.

In weiterer bevorzugter Ausgestaltung der Erfindung ist vorgesehen, dass die Vorrichtung eine zweite Schneideinrichtung umfasst, mittels der ein Abtrennen von Scheiben vorgeb barer Dicke des Bodenmonolithen möglich ist. Diese zweite Schneideinrichtung umfasst vorzugsweise einen Seilschneider zum Einbringen eines radialen Schnittes in den Bodenmonolithen. So lassen sich in einfacher Weise Scheiben definierter Dicke von dem Bodenmonolithen abtrennen.

Die zweite Schneideinrichtung umfasst ferner vorzugsweise eine Fixierungseinrichtung für die abzutrennende Scheibe des Bodenmonolithen, wobei diese vorzugsweise einen die abzutrennende Scheibe umgreifenden Ring und eine relativ zu dem Ring verschiebbare, der Seilschneide folgende Bodenplatte umfasst. Auf diese Weise wird in einfacher Weise möglich, eine Scheibe des Bodenmonolithen definiert abzutrennen, indem diese zunächst fixiert und abschließend getrennt und gleichzeitig von der Bodenplatte aufgenommen wird. Somit sind Beeinträchtigungen der Struktur des Bodenmonolithen innerhalb der abgetrennten Scheibe weitgehend vermieden.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: eine schematische Gesamtansicht einer Vorrichtung zur Entnahme eines Bodenmonolithen aus einem Lysimetergefäß;
- Figur 2: eine Schnittdarstellung durch die Vorrichtung und
- Figuren 3 bis 6: in Draufsichten eine Schneideinrichtung zum Abtrennen von Scheiben in verschiedenen Positionen.

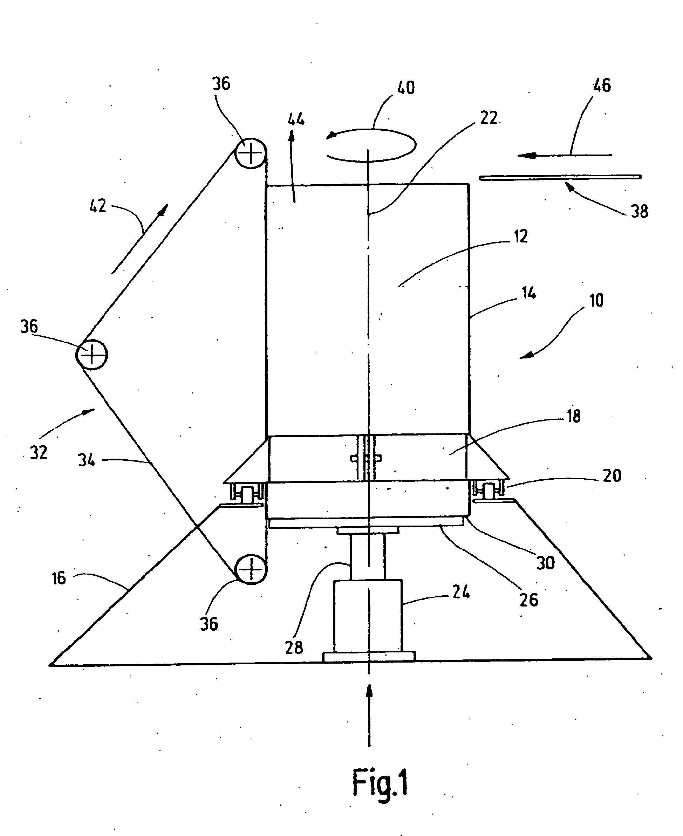

Figur 1 zeigt schematisch eine insgesamt mit 10 bezeichnete Vorrichtung zur Entnahme eines Bodenmonolithen 12 aus einem Lysimetergefäß 14. Die Vorrichtung 10 umfasst eine Halte- und Aufnahmeeinrichtung 16, die aus einer Anzahl von in Figur 1 nicht näher dargestellten Rahmen, Verstrebungen und dergleichen besteht. Die Halte- und Aufnahmeeinrichtung 16 besitzt eine ringförmige Spannmanschette 18, die kraftschlüssig um das Lysimetergefäß 14 anordbar ist. Die Spannmanschette 18 ist über eine Rolleinrichtung **20** um eine Längsachse 22 des Lysimetergefäßes 14 drehbar.

Die Vorrichtung 10 umfasst ferner eine Hubeinrichtung 24, wobei eine Hubplatte 26 mittels eines teleskopartig ausfahrbaren Hydraulikzylinders 28 gemäß der Darstellung in Figur 1 nach oben verfahrbar ist. Ein Außendurchmesser der Hubplatte 26 entspricht hierbei im Wesentlichen einem Innendurchmesser des Lysimetergefäßes 14. Hierbei kommt es zur Ausbildung eines Spaltes 30 zwischen Außenumfang der Hubplatte 26 und dem Lysimetergefäß 14. Die Hubplatte 26 ist somit innerhalb des Lysimetergefäßes 14, ohne dieses zu berühren, verfahrbar.

Die Vorrichtung 10 umfasst ferner eine erste Schneideinrichtung 32, die ein Schneidseil 34 besitzt. Das Schneidseil 34 ist über Umlenkrollen 36 - von denen wenigstens eine antreibbar ist - geführt. Das Schneidseil 34 wird nach Arretierung des Lysimetergefäßes 14 in der Vorrichtung 10 durch eine im Bereich des Spaltes 30 eingebrachte Durchgangsbohrung geführt und zu dem umlaufenden Schneidseil 34 verbunden.

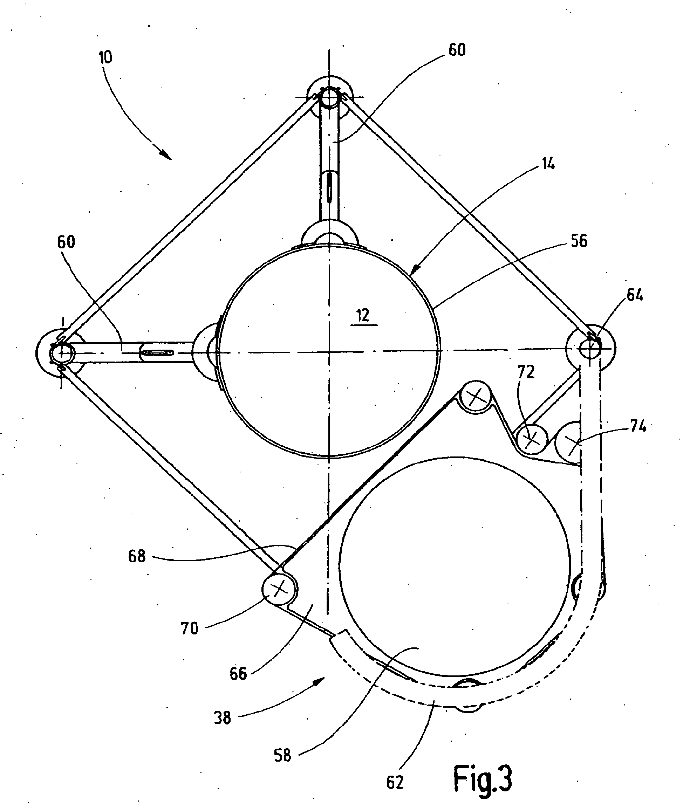

Die Vorrichtung 10 umfasst ferner eine zweite Schneideinrichtung 38, die anhand der Figuren 3 bis 6 noch näher erläutert wird.

Die in Figur 1 dargestellte Vorrichtung 10 zeigt folgende allgemeine Funktion:

Das Lysimetergefäß 14 wird mit dem Bodenmonolithen 12 mittels eines nicht weiter dargestellten Hebezeuges in die Vorrichtung 10 eingebracht. Aufbau und Funktion von. Lysimetergefäßen 14 sind allgemein bekannt, so dass im Rahmen der vorliegenden Beschreibung hierauf nicht näher eingegangen werden soll. Das Lysimetergefäß 14 besteht aus einem im Wesentlichen zylinderförmigen Körper, innerhalb dem der Bodenmonolith 12 angeordnet ist. Das Lysimetergefäß 14 ist an seinen Stirnseiten offen, so dass der Bodenmonolith 12 durch das Lysimetergefäß 14 mantelförmig umgriffen wird.

Nach Position des Lysimetergefäßes 14 in der Vorrichtung 10 und Verankerung über die Spannmanschette 18 wird das Schneidseil 34 der ersten Schneideinrichtung 32 entlang der Innenwandung des Lysimetergefäßes 14 in eine eingebrachte Durchgangsöffnung eingefädelt und zu dem Schneidseil 34 verbunden. Über eine nicht dargestellte Antriebsvorrichtung wird das Lysimetergefäß 14 in Rotation um seine Längsachse 22 versetzt, so dass entsprechend dem dargestellten. Pfeil 40 - oder entgegengesetzt - das Lysimetergefäß 14 sich zumindest einmal um seine Längsachse 22 dreht. Gleichzeitig wird das Schneidseil 34 in Pfeilrichtung 42 - oder entgegengesetzt - in Bewegung gesetzt. Hierdurch erfolgt ein umlaufender Schnitt entlang der Innenwandung des Lysimetergefäßes 14, so dass der Bodenmonolith 12 sauber von dem Lysimetergefäß 14 getrennt ist. Nach diesem erfolgten Schnitt wird die erste Schneideinrichtung 32 entfernt, dass heißt, das Schneidseil 34 wird außer Eingriff mit dem Lysimetergefäß 14 gebracht.

Über die Hubeinrichtung 24 kann nunmehr der Bodenmonolith 12 relativ zu dem Lysimetergefäß 14 verschoben werden. Hierbei wird die Hubplatte 26 über den Hydraulikzylinder 28 angehoben, so dass der Bodenmonolith 12 in Pfeilrichtung 44 aus dem Lysimetergefäß 14 gedrängt wird. Die Hubhöhe der Hubeinrichtung 24 ist hierbei der Bauhöhe des Lysimetergefäßes 14 angepasst, so dass eine vollständige Verdrängung des Bodenmonolithen 12 aus dem Lysimetergefäß 14 möglich ist. Soll der gesamte Bodenmonolith 12 aus dem Lysimetergefäß 14 entnommen werden, wird dieser auf geeignete Weise geführt und steht anschließend für weitere Begutachtungen, Untersuchungen, Messungen, Röntgenaufnahmen, Computertomographieaufnahmen oder dergleichen zur Verfügung.

Soll der Bodenmonolith 12 in einzelne Scheiben zerlegt werden, wobei diese einzelnen Scheiben dann einer späteren Untersuchung zur Verfügung stehen, wird über die Hubeinrichtung 24 der Bodenmonolith 12 so weit abgehoben, bis am oberen Rand des Lysimetergefäßes 14 der Bodenmonolith 12 so weit übersteht, dass die gewünschte Dicke der abzutrennenden Scheibe erreicht ist. Anschließend wird mittels der zweiten Schneideinrichtung 38 in Pfeilrichtung 46 ein radialer Schnitt durch den Bodenmonolithen 12 gelegt, so dass die dann abgetrennte Scheibe - wie anhand der nachfolgenden Figuren noch näher zu erläutert ist - entnommen werden kann. Diese Prozedur wird schrittweise wiederholt, bis der Bodenmonolith in die gewünschte Anzahl der Scheiben mit der entsprechend vorgebbaren Dicke zerlegt ist.

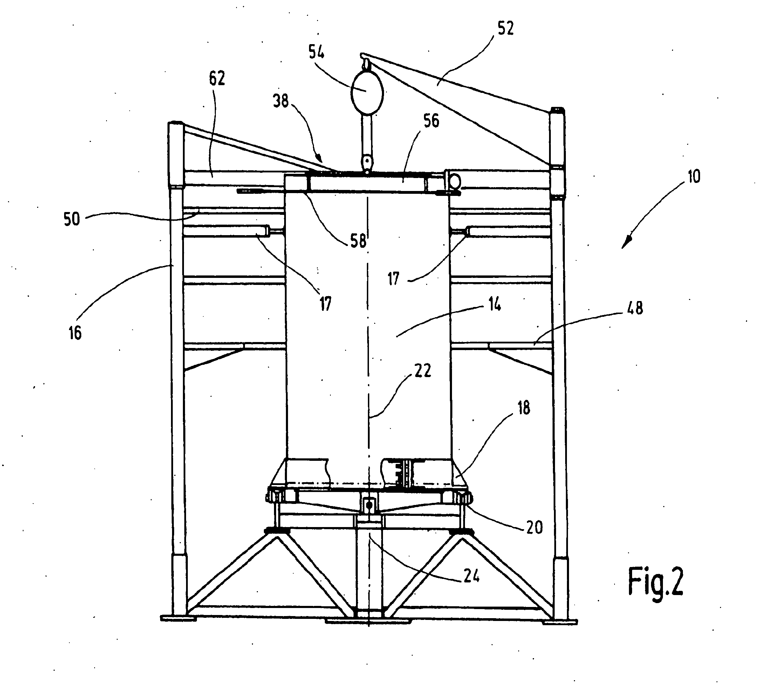

Figur 2 zeigt in einer Seitenansicht nochmals die Vorrichtung 10 mit einem darin angeordneten Lysimetergefäß 14. Es wird deutlich, dass die Halte- und Aufnahmeeinrichtung 16 das Lysimetergefäß 14 stützend und fixierend umgreift, wobei dieses gleichzeitig über die Spannmanschette 18 und die Rolleinrichtung 20 um die Längsachse 22 drehbar gelagert ist. Beispielsweise sind teleskopartig verstellbare Stützen 17 vorgesehen, die nach der Rotation des Lysimetergefäßes 14 an dieses angreifen. Die Vorrichtung 10 umfasst ferner eine hier lediglich angedeutete Arbeitsbühne 48 und Geländer 50, auf denen eine Handhabung beziehungsweise Überwachung der Vorrichtung 10 während deren bestimmungsgemäßen Einsatzes möglich ist.

In Figur 2 wird die zweite Schneideinrichtung 38 deutlich. Dieser ist ein verschwenkbarer Hebearm 52 zugeordnet, an dessen Lastaufnahmemittel 54 ein Ringsegment 56 anhängbar ist. Das Ringsegment 56 umschließt eine vom Bodenmonolithen 12 abzutrennende Scheibe, wobei zwischen Ringsegment 56 und Lysimetergefäß 14 eine Bodenplatte 58 einbringbar ist. Auf diese Weise wird das sich innerhalb des Ringsegmentes 56 befindende Teilvolumina des Bodenmonolithen 12 als Scheibe abgetrennt und kann mittels des Hebearms 52 entfernt werden. Aufbau und Funktion der zweiten Schneideinrichtung 38 wird anhand der nachfolgenden Figuren 3 bis 6 noch näher erläutert.

Figur 3 zeigt eine Draufsicht auf die Vorrichtung 10, wobei gleiche Teile wie in den vorhergehenden Figuren mit den gleichen Bezugszeichen versehen und nicht nochmals erläutert sind.

Gemäß der nachfolgenden Darstellung ist der Bodenmonolith 12 durch die Hubeinrichtung 24 aus dem Lysimetergefäß 14 so weit herausgedrückt worden, dass oberhalb des Lysimetergefäßes 14 die abzutrennende Scheibe liegt. Diese abzutrennende Scheibe ist durch das Ringsegment 56 umgriffen, dass von Haltearmen 60 fixiert ist. Zwischen Ringsegment 56 und Lysimetergefäß 14 ist ein in Figur 3 nicht sichtbarer Spalt ausgebindet. In diesen Spalt wird die Schneideinrichtung 38 verschwenkt. Hierzu besitzt die Schneideinrichtung 38 eine mittels eines Schwenkarmes 62 um eine Drehachse 64 verschwenkbare Grundplatte 66. Die Grundplatte 66 trägt in geeigneten Aufnahmemitteln die Bodenplatte 58. Um die Grundplatte 66 umlaufend ist ein Schneidseil 68 angeordnet, dass über Umlenkrollen 70 beziehungsweise Spannrolle 72 und Antriebsrolle 74 geführt ist.

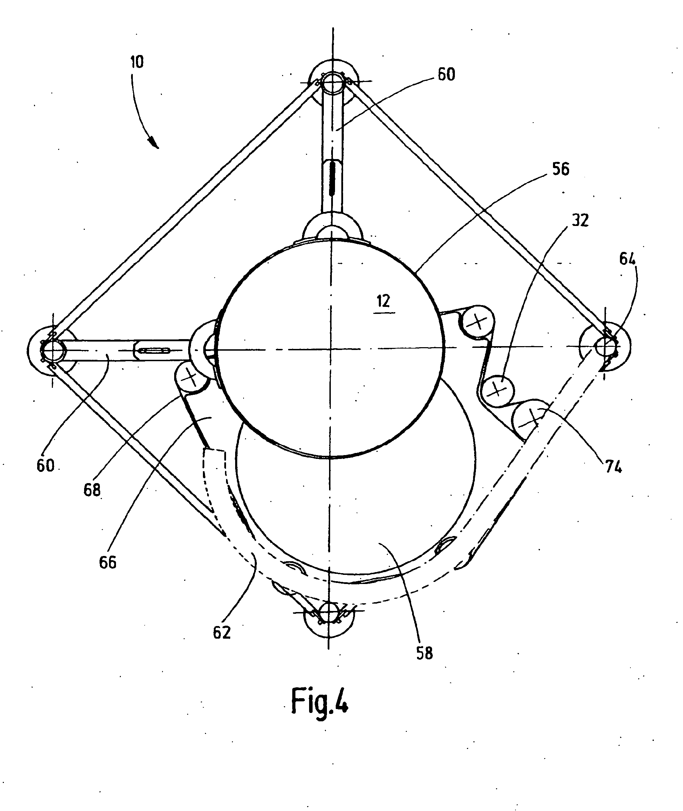

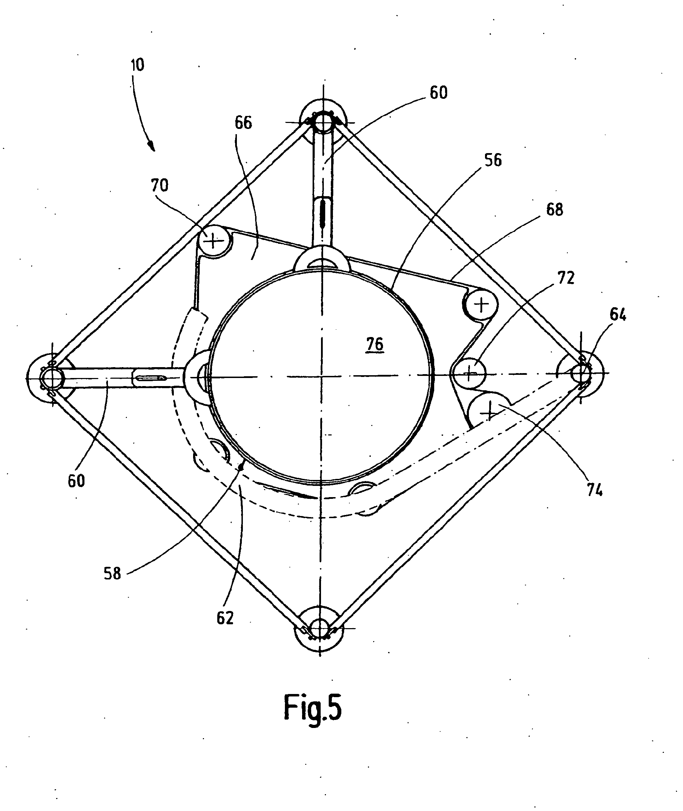

Anhand der Figuren 4 und 5 wird der Schneidvorgang mittels der Schneideinrichtung 38 verdeutlicht. Hierbei schwenkt die Schneideinrichtung 38 über den Schwenkarm 62 um die Schwenkachse 64 in den Bodenmonolithen 12 hinein. Die Grundplatte 66 und somit das Schneidseil 68 und die Bodenplatte 58 werden hierbei in den Spalt zwischen dem Ring 56 und dem Lysimetergefäß 14 eingebracht. Mittels des Schneidseiles 68 erfolgt die Trennung der späteren Scheibe vom Bodenmonolithen 12, während die Bodenplatte 58 synchron unter den bereits durchtrennten Bereich des Bodenmonolithen 12 fährt.

Nach Abschluss des Schneidvorganges - wie in Figur 5 verdeutlicht - kommt somit die Bodenplatte 58 unter der dann vom Bodenmonolithen 12 abgeschnittenen Scheibe 76 zum Liegen. Die Scheibe 76 befindet sich innerhalb des durch die Haltearme 60 gehaltenen Ringsegmentes 56.

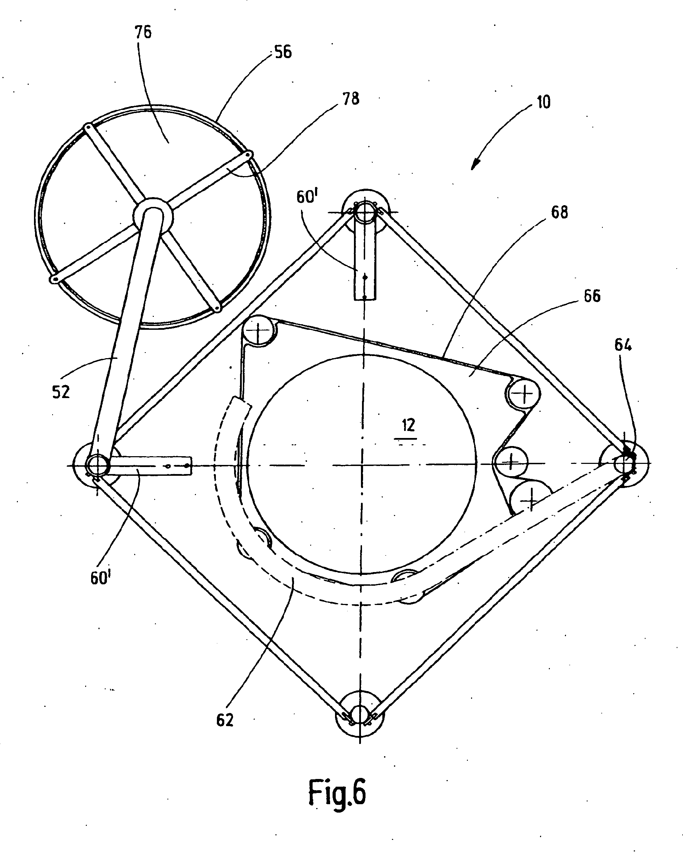

Figur 6 verdeutlicht das Abnehmen der abgeschnittenen Scheibe 76 des Bodenmonolithen 12. Hierzu greift der - in den Figuren 3 bis 5 nicht dargestellte - Hebearm 52 über ein Traggestell 78 an das Ringsegment 56 an. Das Ringsegment 56 umgreift die Scheibe 76 des Monolithen 12 und wird nach unten durch die Bodenplatte 58 begrenzt. Die Bodenplatte 58 ist über geeignete, nicht dargestellte Verbindungselemente mit dem Ringsegment 56 verbunden worden. Mittels des Tragarmes 52 kann somit die in dem Ringsegment 56 geschützt aufgenommene Scheibe 76 auf einem Transportwagen, Hubtisch oder dergleichen zur weiteren Lagerung beziehungsweise weiteren Verwendung abgelegt werden. Vor Abheben des Ringsegmentes 56 durch den Haltearm 52 werden die Haltearme 60, mittels denen das Ringsegment 56 zuvor fixiert wurde, gelöst.

Entsprechend der geschilderten Vorgehensweise anhand der Figuren 3 bis 6 kann nunmehr in einem nächsten Arbeitsschritt die nächste Scheibe 76 des Bodenmonolithen 12 abgetrennt werden.

### BEZUGSZEICHENLISTE

- 10: Vorrichtung zur Entnahme eines Bodenmonolithen
- 12: Bodenmonolith
- 14: Lysimetergefäß
- 16: Halte- und Aufnahmeeinrichtung
- 17: Stützen
- 18: Spannmanschette
- 20: Rolleinrichtung
- 22: Längsachse
- 24: Hubeinrichtung
- 26: Hubplatte
- 28: Hydraulikzylinder
- 30: Spalt
- 32: erste Schneideinrichtung
- 34: Schneidseil
- 36: Umlenkrollen
- 38: zweite Schneideinrichtung
- 40: Pfeil, Darstellung der Drehung des Lysimetergefäßes um Längsachse
- 42: Bewegungsrichtung Schneidseil
- 44: Bewegungsrichtung des Bodenmonolithen aus Lysimetergefäß
- 46: radiale Schnittrichtung durch BodenmonoLithen
- 48: Arbeitsbühne
- 50: Geländer
- 52: Hebearm
- 54: Lastaufnahmemittel
- 56: Ringsegment
- 58: Bodenplatte
- 60: Haltearm
- 62: Schwenkarm
- 64: Drehachse
- 66: verschwenkbare Grundplatte
- 68: Schneidseil
- 70: Umlenkrolle
- 72: Spannrolle
- 74: Antriebsrolle
- 76: Scheibe
- 78: Traggestell

## Patentansprüche

1. Vorrichtung zur Entnahme eines Bodenmonolithen aus einem Lysimetergefäß mit einer Halte- und Aufnahmeeinrichtung (16) für das den Bodenmonolithen (12) enthaltene Lysimetergefäß (14) und eine auf den Bodenmonolithen (12) einwirkende Hubeinrichtung (24) zum stufenlosen und/oder stufenweisen Verlagern des Bodenmonolithen (12) aus dem Lysimetergefäß (14), **dadurch gekennzeichnet, dass** die Vorrichtung (10) eine erste Schneideinrichtung (32) umfasst, mittels der ein Lösen der Außenwandung des Bodenmonolithen (12) von der Innenwandung des Lysimetergefäßes (14) möglich ist und die Halte- und Aufnahmeeinrichtung (16) für das Lysimetergefäß (14) drehbar gelagert ist, so dass das Lysimetergefäß (14) mit dem Bodenmonolithen (12) um seine Längsachse (22) drehbar ist

2. Vorrichtung nach Anspruch 1, **dadurch gekennzeichnet, dass** die Vorrichtung eine zweite Schneideinrichtung (38) umfasst, mittels der ein Abtrennen von Scheiben (76) vorgebbarer Dicke des Bodenmonolithen (12) möglich ist.

3. Vorrichtung nach Anspruch 2, **dadurch gekennzeichnet, dass** die zweite Schneideinrichtung (38) ein Schneidsell (68), einen Bandschneider oder dergleichen zum Einbringen eines radialen Schnittes in den Bodenmonolithen (12) umfasst.

4. Vorrichtung nach einem der Ansprüche 2 oder 3, **dadurch gekennzeichnet, dass** die zweite Schneideinrichtung (38) eine Fixierungseinrichtung für die abzutrennende Scheibe (76) des Bodenmonolithen (12) umfasst, Wobei diese vorzugsweise einen die abzutrennende Scheibe (76) umgreifendes Ringsegment (56) und eine relativ zu dem Ringsegment (56) verschiebbare, dem Schneidseil (68), Bandschneider oder dergleichen folgende, Bodenplatte (58) umfasst.

5. Verfahren zum Entnehmen eines Bodenmonolithen aus einem Lysimetergefäß, wobei auf den Bodenmonolithen (12) und/oder das Lysimetergefäß (14) eine kraft aufgebracht wird und der Bodenmonolith (12) und das Lysimetergefäß (14) relativ zueinander verlagen werden, **dadurch gekennzeichnet, dass** der Bodenmonolith (12) vom Lysimetergefäß (14) gelöst, wird und anschließend aus dem Lysimetergefäß (14) bewegt wird.

6. Verfahren nach Anspruch 5, **dadurch gekennzeichnet, dass** der Bodenmonolith (12) stufenlos und/oder stufenweise aus dem Lysimetergefäß (14) bewegt wird.

7. Verfahren nach Anspruch 6, **dadurch gekennzeichnet, dass** nach jeder stufenweisen Verlagerung des Bodenmonolithen (12) aus dem Lysimetergefäß (14) eine Scheibe (76) von dem Bodenmonolithen (12) abgetrennt wird.

## Claims

1. A device for removing a soil monolith from a lysimeter casing with a holding and supporting means (16) for the lysimeter casing (14) containing the soil monolith (12) and a lifting apparatus (24) acting upon the soil monolith (12) for stepless and / or stepwise shifting of the soil monolith (12) out of the lysimeter casing (14), **characterized in that** the device (10) comprises a first cutting means (32) by means of which the external wall of the soil monolith (12) can be detached from the internal wall of the lysimeter casing (14), and the holding and supporting means (16) for the lysimeter casing (14) is pivoted so that the lysimeter casing (14) can be rotated with the soil monolith (12) about its longitudinal axis (22).

2. The device according to claim 1, **characterized in that** the device comprises a second cutting means (38) by means of which a cutting off of disks (76) of a predefineable thickness of the soil monolith (12) is possible.

3. The device according to claim 2, **characterized in that** the second cutting means (38) comprises a cutting rope (68), a tape cutter or the like for applying a radial cut into the soil monolith (12).

4. The device according to any one of claims 2 or 3, **characterized in that** the second cutting means (38) comprises a locating means for the disk (76) to be cut off of the soil monolith (12), said locating means preferably comprising a ring segment (56), which encompasses the disk (76) to be cut off, and a bottom plate (58) movable relative to the ring segment (56) and following the cutting rope (68), the tape cutter or the like.

5. A method for removing a soil monolith from a lysimeter casing, with a force being applied on the soil monolith (12) and / or the lysimeter casing (14) and the soil monolith (12) and the lysimeter casing (14) being shifted relative to each other, **characterized in that** the soil monolith (12) is detached from the lysimeter casing (14), and is subsequently moved out of the lysimeter casing (14).

6. A method according to claim 5, **characterized in that** the soil monolith (12) is moved out of the lysimeter casing (14) in a stepless and / or stepwise way.

7. A method according to claim 6, **characterized in that** after each stepwise shifting of the soil monolith (12) from the lysimeter casing (14), a disk (76) is cut off from the soil monolith (12).

## Revendications

1. Dispositif pour éliminer un monolithe du sol à partir d'une case lysimétrique avec un moyen de maintien et de réception (16) pour la case lysimétrique (14) comportant le monolithe du sol (12) et un appareil élévateur (24) agissant sur le monolithe du sol (12) pour le déplacement continu et / ou par étapes du monolithe du sol (12) à partir de la case lysimétrique (14), **caractérisé en ce que** le dispositif (10) comprend un premier moyen de coupe (32) par lequel la paroi externe du monolithe du sol (12) peut être détachée de la paroi interne de la case lysimétrique (14) et le moyen de maintien et de réception (16) pour la case lysimétrique (14) est pivotant de manière que la case lysimétrique (14) est rotative avec le monolithe du sol (12) autour de son axe longitudinal (22).

2. Dispositif selon la revendication 1, **caractérisé en ce que** le dispositif comprend un deuxième moyen de coupe (38) au moyen duquel il est possible de couper des disques (76) d'une épaisseur prédéfinissable du monolithe du sol (12).

3. Dispositif selon la revendication 2, **caractérisé en ce que** le deuxième moyen de coupe (38) comprend un câble de coupe (68), un coupeur de ruban ou similaires pour introduire une coupe radiale dans le monolithe du sol (12).

4. Dispositif selon l'une quelconque des revendications 2 ou 3, **caractérisé en ce que** le deuxième moyen de coupe (38) comprend un moyen de fixation pour le disque (76) à couper du monolithe du sol (12), ledit moyen de fixation comprenant de préférence un segment annulaire (56) entourant le disque (76) à couper et une plaque de fond (58) translatable relatif au segment annulaire (56) et suivant le câble de coupe (68), le coupeur de ruban ou similaires.

5. Procédé pour éliminer un monolithe du sol à partir d'une case lysimétrique, une force étant appliquée au monolithe du sol (12) et / ou à la case lysimétrique (14) et le monolithe du sol (12) et la case lysimétrique (14) étant déplacés l'un par rapport à l'autre, **caractérisé en ce que** le monolithe du sol (12) est détaché de la case lysimétrique (14) et est mû ensuite à partir de la case lysimétrique (14).

6. Procédé selon la revendication 5, **caractérisé en ce que** le monolithe du sol (12) est mû à partir de la case lysimétrique (14) d'une manière continue et / ou par étapes.

7. Procédé selon la revendication 6, **caractérisé en ce qu'**après chaque déplacement par étapes du monolithe du sol (12) à partir de la case lysimétrique (14) un disque (76) est coupé du monolithe du sol (12).
